(19) **Europäisches Patentamt / European Patent Office / Office européen des brevets**

(11) **EP 2 399 046 B1**

(12) **EUROPEAN PATENT SPECIFICATION**

(45) Date of publication and mention
of the grant of the patent:
**18.09.2013 Bulletin 2013/38**

(51) Int Cl.:
**F16H 37/08** (2006.01)

(21) Application number: **10712509.8**

(86) International application number:
**PCT/IB2010/050759**

(22) Date of filing: **22.02.2010**

(87) International publication number:
**WO 2010/095111 (26.08.2010 Gazette 2010/34)**

(54) **CONTINUOUSLY VARIABLE TRANSMISSION SYSTEM**

STUFENLOSES GETRIEBESYSTEM

SYSTÈME DE BOÎTE DE VITESSE À VARIATION CONTINUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.02.2009 IT MO20090043**

(43) Date of publication of application:
**28.12.2011 Bulletin 2011/52**

(73) Proprietor: **Bordini Engineering Srl**
**41124 Modena (IT)**

(72) Inventor: **Bordini, Giorgio**
**I-41043 Formigine (MO) (IT)**

(74) Representative: **Crugnola, Pietro et al**
**Luppi Crugnola & Partners S.r.l.**
**Viale Corassori 54**
**41124 Modena (IT)**

(56) References cited:
| | |
|---|---|
| **EP-A- 1 378 686** | **WO-A-2004/008001** |
| **WO-A2-2008/142523** | **DE-A1- 3 212 769** |
| **DE-A1-102007 017 573** | **JP-A- 10 246 305** |
| **US-A- 4 864 889** | **US-A1- 2002 169 048** |
| **US-A1- 2008 194 372** | |

EP 2 399 046 B1

**Description**

The invention relates to a continuously variable transmission system, in particular for vehicles that have to be subjected to multiple conditions of use, i.e. that are variable from conditions that require very high advancing or traction efforts at very low power to conditions that require relatively limited advancing or traction efforts and at high speeds.

A category of vehicles that is particularly representative of the aforesaid conditions, is that of tractors, and in particular agricultural tractors, that have to be able to develop, at one end of the operating range, a tractive effort of a value that is equal to or even greater than the weight of the vehicle, as if they then had to move on a vertical trajectory, also at speeds of less than 1 km/h, or at another end of the operating range, have to be able to reach speeds of up to 50 km/h, possibly also up to 60/70 km/h, and not always with the possibility of freely choosing the rotation speed of the engine, for example when tools have to be driven by the power takeoff of the tractor. These vehicles thus require transmissions having ranges, or ratios between maximum speed and minimum speed, also up to a value of 50, compared with a motor vehicle in which such a ratio can be at most 5, as the same rotation speed of the engine.

Further, the engine speed of the engine cannot always help to correct the speed, as the engine speed may be dictated by the need to drive equipment, by a suitable drive shaft on the tractor, and the rotation speed of which, at preset speeds, is proportional to the rotation speed of the engine. Consequently, the transmissions of agricultural tractors have to be able to achieve a plurality of ratios, to enable an equal plurality of intermediate speeds between the minimum and maximum speed, and thus to be able to cover appropriately the needs of use at intermediate speeds between the minimum and maximum speed, and thus being able to disconnect, within certain limits, the engine rotation speed from the vehicle translation speed.

Continuously variable transmissions are known (CVT) that are based on the use of mechanical belt or chain variators, consisting of a pair of pulleys connected by a belt or a chain, in which by varying the winding diameter of the belt or chain on the drive and driven pulley, the transmission ratio also varies.

Mechanical belt or chain variators are prevalently used in cases in which a significant opening of the variator is not required, as in the case of motorcycles and light street vehicles (where the opening of a variator is defined as the total variation in the transmission ratio, or the ratio between the maximum transmission ratio and the minimum transmission ratio; with current techniques a value of approximately 6 can be reached) and they have the advantage of being uncostly.

Nevertheless, in the case of agricultural tractors, mechanical belt or chain variators have the drawback of not being able to achieve alone the range of ratios that is necessary for correct operation and cannot thus be used despite the low cost thereof, except in particular cases of service vehicles and of low powers.

It is further known, in some applications, to associate mechanical variators of belt or chain type with speed changes, having a plurality of fixed ratios, that enable the opening of the variator to be positioned on different zones of the expected speed range of the vehicle.

Nevertheless, such types of associations have the drawback of not being able to be considered to be continuously variable transmissions, inasmuch, at the moment of change of the fixed ratio, power transmission must be necessarily interrupted, causing a loss of control of the speed of the vehicle when the transmission passes through a neutral state.

In order to lessen the drawbacks linked to the passage of ratio through neutral, introducing friction clutches between the various ratios is known so as to impose the exiting ratio on the entering ratio, i.e. by associating a mechanical belt or chain variator with multiratio transmissions, with ratios that are engageable and changeable even under load, i.e. with the possibility of changing ratio without excessive discontinuities in the power transmission. Such transmissions are of the power-shift type.

Nevertheless the power-shift transmissions are heavily penalised by very great stresses, dissipations of power and overloadings upon change ratio, in addition to very high construction costs.

The speeds at which a working vehicle such as an agricultural tractor has to operate mainly have use frequencies near characteristic values. For example, towing on a road is conducted at speeds of 40-50 km/h, whilst light cultivations or towing on a field is conducted at speeds of 10-15 km/h. In these cases, speed fluctuations around said values can be obtained easily by adjusting the rotation speed of the endothermic engine of the vehicle. This is particularly easy to obtain owing to the developments of modern engines, characterised by very high operating elasticity.

Nevertheless, known variators, both of belt or chain type, or of other known types, have the drawback of having power efficiency, in each of the work points, that is always significantly lower than that of a pair of gears that have the same transmission ratio. However, for each set transmission ratio that is achieved by a variator, a power loss occurs that is much greater than if the ratio is obtained by a pair of gears.

In other words, any type of variator has, for each determined transmission ratio, friction losses that are much greater than those relating to a transmission configuration achieved via gears, with the same ratio.

A transmission system in accordance with the preamble of claim 1 is known from DE 3543635 A.

An object of the invention is to improve known continuously variable transmission systems.

A further object is to obtain a continuously variable transmission system that creates a wide range of transmission ratios.

A further object is to obtain a continuously variable transmission system without interrupting to the power transmission.

Still another object is to obtain a continuously variable transmission system having low power absorption, i.e. low power losses and low frictions.

A still further object is to obtain a continuously variable transmission system that is efficient, compact, with reduced consumption and with low manufacturing costs.

According to the invention, a system is provided as defined in claim 1.

Owing to the system according to the invention, it is possible to obtain a continuously variable transmission system that enables the speed variation range to be widened without resorting to mechanical speed changes, without interrupting the traction in the entire speed variation range, also in the switch between forward and backward motion.

The invention can be comprised and implemented better with reference to the attached drawings wherein Figures 1 to 21 are explanatory drawings not comprised in the invention:

Figure 1 is a diagram of a continuously variable transmission system in a zero advancing speed configuration of a vehicle;

Figure 2 is a diagram of the continuously variable transmission system in a forward motion configuration of the vehicle at average speed;

Figure 3 is a diagram of the continuously variable transmission system in a reverse motion configuration of the vehicle;

Figure 4 is a diagram of a continuously variable transmission system in a first intermediate switch configuration from the configuration in Figure 2 to a forward motion configuration of the vehicle at high speed;

Figure 5 is a diagram of a continuously variable transmission system in a second intermediate switch configuration from the configuration in Figure 2 to a forward motion configuration of the vehicle at high speed;

Figure 6 is a diagram of a continuously variable transmission system in a third intermediate switch configuration from the configuration in Figure 2 to a forward motion configuration of the vehicle at high speed;

Figure 7 is a diagram of a continuously variable transmission system in a forward motion configuration at top speed;

Figure 8 is a first variation of a continuously variable transmission system in a so-called overdrive configuration, that thus enables the maximum speed to be increased without varying the transmission ratio;

Figure 9 is a diagram of the continuously variable transmission system in a neutral configuration;

Figure 10 is a graph of the speed obtainable with the system in function of the transmission ratio;

Figure 11 is a diagram of a double epicyclic gear used in the continuously variable transmission system ;

Figure 12 is a diagram of a clutch device used in the continuously variable transmission system in an operating configuration;

Figure 13 is a section taken along the plane XIII-XIII in Figure 12;

Figure 14 is a section taken along the plane XIV-XIV in Figure 12;

Figure 15 is a diagram of the clutch device in an engaged configuration;

Figure 16 is a diagram of the clutch device in a disengaged configuration;

Figure 17 is a diagram of the clutch device in a pre-engaged configuration;

Figure 18 is a second version of the continuously variable transmission system in an operating configuration like that in Figure 1;

Figure 19 is a section taken along the plane XIX-XIX in Figure 18;

Figure 20 is a third version of the continuously variable transmission system in an operating configuration like that in Figure 1;

Figure 21 a fourth version of the continuously variable transmission system in an operating configuration like that in Figure 1;

Figure 22 is a version of the continuously variable transmission system according to the invention, in an operating configuration like that in Figure 1.

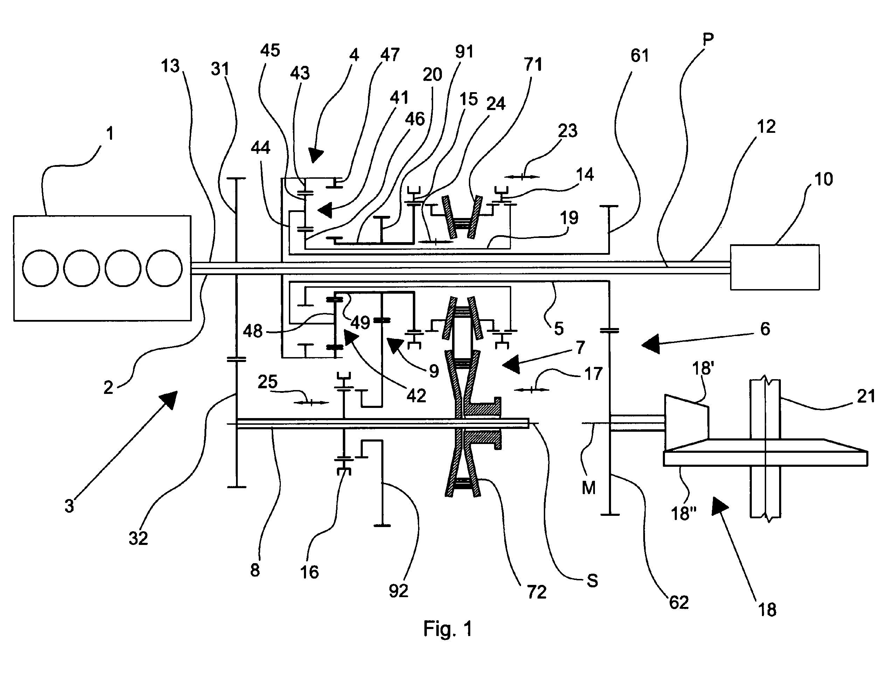

With reference to Figure 1, the continuously variable transmission system comprises an engine 1 of a vehicle, for example an agricultural tractor that is not shown, the driving shaft 2 of which is connected at one end 12 to a power takeoff 10, that is able to drive tools couplable therewith that are not illustrated.

At another end 13, the driving shaft 2 is connected to a first gear 3 comprising a first toothed wheel 31 that engages with a second toothed wheel 32. The driving shaft 2 rotates around a primary rotation axis P.

The first toothed wheel 31 is coaxial with the driving shaft 2.

Between the end 12 and the other end 13, the driving shaft 2 is further connected to a first crown 43 of a first epicyclic train 41 that is part of an epicyclic gear 4. In this manner, the engine 1 transmits motion, through the driving shaft 2, to the first crown 43.

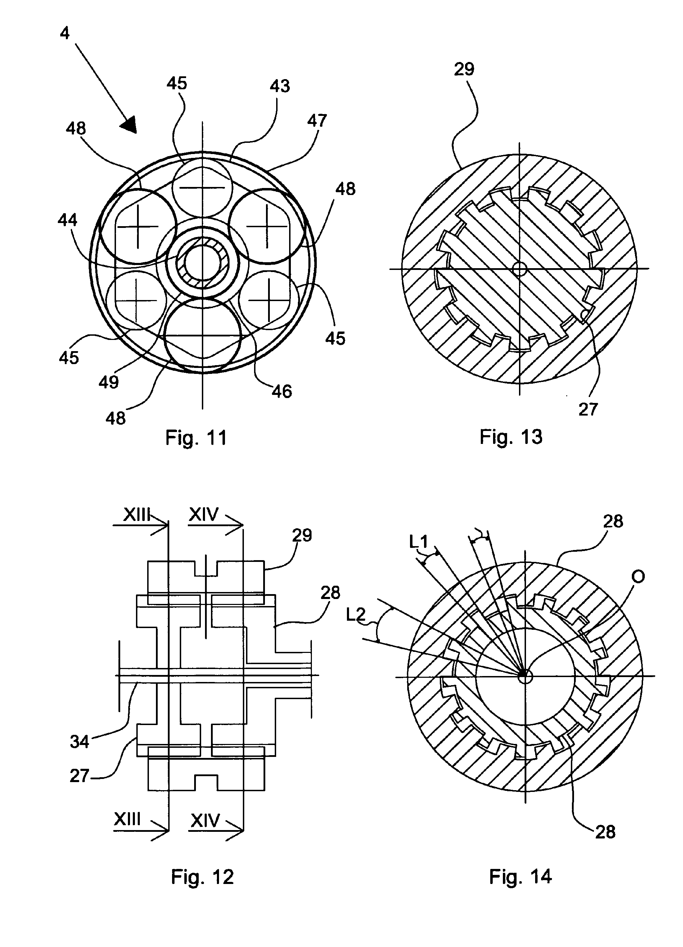

The first epicyclic train 41 further comprises first planets 45, for example 3 in number, and a first sun gear 46, also illustrated in Figure 11.

The epicyclic gear 4 further comprises a second epicyclic train 42, consisting of a second crown 47, of second planets 48, for example three in number, and of a second sun gear 49, also illustrated in Figure 11.

The first epicyclic train 41 and the second epicyclic train 42 have in common a planet gear carrier 44 that thus supports the first planets 45 and the second planets 48.

The epicyclic gear 4 is thus a composite epicyclic gear as it consists of two distinct epicyclic trains that have the planet gear carrier 44 in common.

The planet gear carrier 44, the first sun gear 46 and the second sun gear 49 rotate or are rotated around the primary rotation axis P.

The first epicyclic train 41 and the second epicyclic train 42 are dimensioned so as to have respective transmission ratios that are different from one another. For example, the number of teeth of the first sun gear 46 is greater than the number of teeth of the second sun gear 49.

The planet gear carrier 44 is connected by a second shaft 5, that is externally coaxial to the driving shaft 2, to a second gear 6, comprising a third toothed wheel 61 and a fourth toothed wheel 62, engaging with one another.

The third toothed wheel 61 is splined on the second shaft 5 of the planet gear carrier 44, whilst the fourth toothed wheel 62 is connected by motion transmitting means of known type, for example a pair of bevel gears 18, to the shaft 21 of the driving wheels of the vehicle.

The pair of bevel gears 18 comprises a first bevel gear 18', having a rotation axis M that is parallel to the primary rotation axis P of the second shaft 5 and to the secondary rotation axis S of the third shaft 8, and a second bevel gear 18", having a rotation axis coinciding with the rotation axis of the shaft 21.

The second toothed wheel 32 is splined on a third shaft 8 that rotates around a secondary rotation axis S, that is parallel to the primary rotation axis P. The third shaft 8 drives the driving pulley 72 of a speed variator 7, for example a Vee belt or a chain variator, the driven pulley 71 of which is mounted in a freely rotatable manner on a fourth shaft 19, on which is splined the first sun gear 46. First actuating means 17 is associated with the speed variator 7, to command the transmission ratio variation thereof.

The rotation direction of the third shaft 8 is opposite the rotation direction of the driving shaft 2, thus, also the driving pulley 72 and the driven pulley 71 of the speed variator 7 rotate in an opposite direction to the rotation direction of the driving shaft 2.

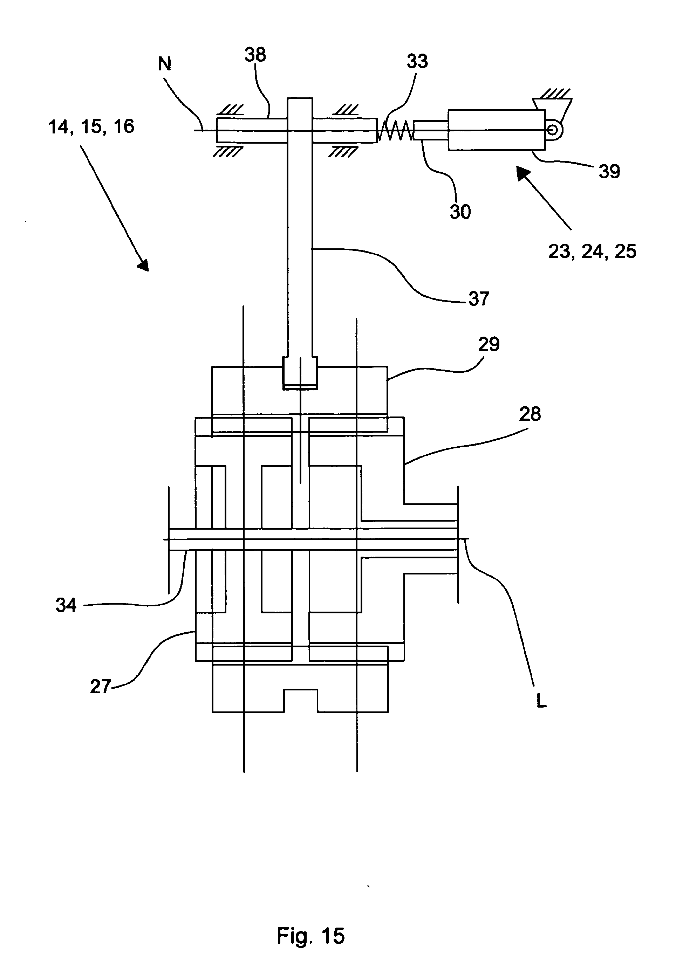

The driven pulley 71 is selectively connectable by a first clutch device 14 to the fourth shaft 19 on which is splined the first sun gear 46. With the first clutch device 14 second actuating means 23 is associated, illustrated in Figures 15-17, for example actuators of linear type, that are suitable for engaging/disengaging the first clutch device 14.

The driven pulley 71 is further connectable by a second clutch device 15, to a fifth shaft 20, on which is splined the second sun gear 49. The fifth shaft 20 is externally coaxial to the fourth shaft 19.

With the second clutch device 15 there is associated third actuating means 24, illustrated in Figures 15-17, for example actuators of linear type, that are suitable for engaging/disengaging the second clutch device 15.

The fifth shaft 20 is connectable to the third shaft 8 by a third gear 9, comprising a fifth toothed wheel 91, splined on the fifth shaft 20, and a sixth toothed wheel 92, mounted in a freely rotatable manner on the third shaft 8 and connectable thereto by a third clutch device 16.

With the third clutch device 16 fourth actuating means 25 is associated, illustrated in Figures 15-17, for example actuators of linear type, that are suitable for engaging/disengaging the third clutch device 16.

The first clutch device 14, the second clutch device 15 and the third clutch device 16 can be, for example, claw clutch devices, in particular with front claws, illustrated in Figures 12, 13, 14, 15, 16, 17.

Each of the clutch devices 14, 15, 16 comprises an axle shaft 27 splined on a shaft 34 and a hub 28 mounted in a freely rotatable manner on the shaft 34.

The first clutch device 14, the second clutch device 15 and the third clutch device 16 further comprise a sleeve 29, which is couplable, on one side, owing to the teething with which it is provided, with the teeth of the axle shaft 27 and with the teeth of the hub 28, whilst, on the other side, it is connected to a control lever 37.

The control lever 37 engages with an clutch shaft 38 connected to the respective actuating means 23, 24 and 25.

Each actuating means 23, 24, 25 can be any actuating means of known type that is suitable for driving the control lever 37. For example each actuating means 23, 24, 25 can comprise a cylinder 39 inside which a piston 30 is slidable that is connected by an elastic device 33, to the clutch shaft 38.

The elastic device 33 can be a spring.

The piston 30, the elastic device 33 and the clutch shaft 38 are moved to move along a second longitudinal axis N.

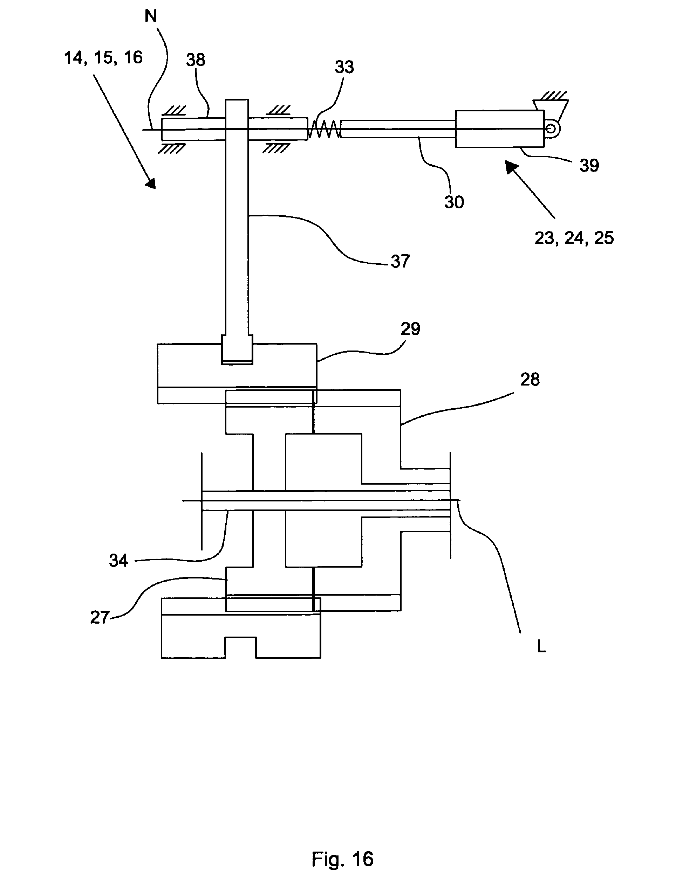

When the clutch devices 14, 15 or 16 are not engaged, the elastic device 33 is in a rest position and the piston 30, is in an extended configuration, as illustrated in Figure 16. In this disengaged configuration of the clutch devices 14, 15, 16 the teeth of the sleeve 29 engage with the teeth of the axle shaft 27, in such a manner that both sides of each tooth of the sleeve 29 and of the axle shaft 27 are engaged in an abutting manner against respective recesses of the sleeve 29 and of the axle shaft 27. The coupling that is created between the sleeve 29 and the axle shaft 27 is, consequently, without significant clearance. Figure 13, which is a section taken along the plane XIII-XIII in Figure 12, shows the shaping coupling between the sleeve 29 and the axle shaft 27.

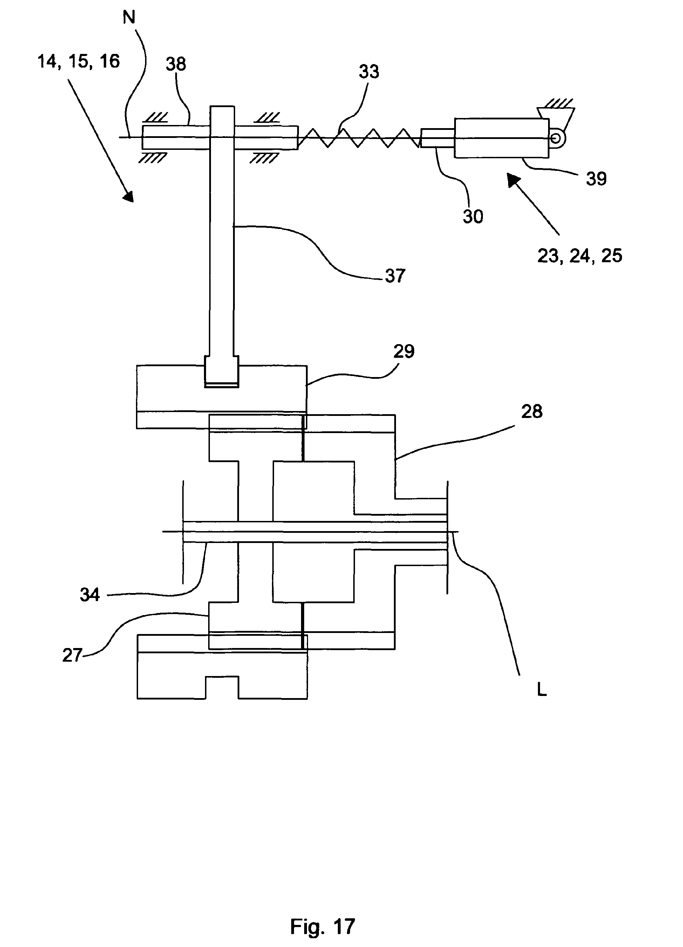

When it is necessary to engage the clutch devices 14, 15, 16, the actuating means 23, 24, 25 ensures that the piston 30 retracts and that that the spring 33 thus becomes tense. This corresponds to a pre-engaged configuration of the clutch devices 14, 15, 16 shown in Figure 17.

As the cylinder 39 is fixed and cannot move, the returning force of the elastic device 33 causes the clutch shaft 38 and consequently the control lever 37 and the sleeve 29 to move laterally.

When the teeth of the hub 28 are at the recesses of the sleeve 29, the sleeve 29 can slide axially through the effect of the returning force of the elastic device 33 and engage on the hub 28 thus establishing a connection between the shaft 34 and the hub 28. The teeth of the hub 28 may have a width L1 that is significantly less than that L2 of the recesses of the sleeve 29, i.e. that in the coupling between the sleeve 29 and the hub 28 there is significant clearance. This clearance ensures that a perfect synchronism between the sleeve 29 and the hub 28 is not necessary inasmuch as the teeth of the hub 28, being of lesser width than that of the recesses of the sleeve 29, can enter inside the respective recesses of the sleeve 29 even in the presence of a relative speed between the sleeve 29 and the hub 28. The teeth of the hub 28 in fact have the possibility of sliding along a circumference arc that is equal to an angle $\alpha$ with respect to a centre O. When the teeth of the hub 28 abut against one of the walls of the recess of the sleeve 29 - which of the two walls depends on the direction of the relative speed between the hub 28 and the sleeve 29 - the sleeve 29 and the hub 28 grip and transfer of power between the two parts that make the coupling is possible.

In order to disengage the clutch devices 14, 15, 16, the piston 30 is carried in the extended configuration compressing the elastic device 33 so as to slide the sleeve 29 disengaging the sleeve 29 from the hub 28 at the instant in which the torque has to be reset to return to the disengaged configuration in Figure 16.

In the operating configuration in Figure 1, the driven pulley 71 of the speed variator 7 is connected by the first clutch device 14 to the fourth shaft 19, on which is splined the first sun gear 46, i.e. the one having a greater number of teeth. In this configuration, only the first epicyclic train 41 is active, i.e. transmits power.

Further, the third clutch device 16 is open such that the sixth toothed wheel 92 is not connected to the third shaft 8.

With the operating configuration illustrated in Figure 1, indicating with:

- $\omega_{c1}$ the absolute value of the rotation speed of the first crown 43 of the first epicyclic train 41, which is the same as the rotation speed of the driving shaft 2;
- $\omega_{s1}$ the absolute value of the rotation speed of the first sun gear 46;
- $\omega_p$ the absolute value of the rotation speed of the planet gear carrier 44, that is proportional to the rotation speed of the driving wheels of the vehicle,

on the basis of the known law of Willis, the following ratio is obtained

$$\omega_r = k\omega_p = k(-\omega_{s1}\frac{Z_{11}}{Z_{11}+Z_{13}}+\omega_{c1}\frac{Z_{13}}{Z_{11}+Z_{13}}) \qquad (1)$$

in which:

- $\omega_r$ is the rotation speed of the driving wheels of the vehicle;
- k is the transmission ratio between the second shaft 5, on which is splined the planet gear carrier 44, and the shaft 21 of the driving wheels;
- $Z_{11}$ is the number of teeth of the first sun gear 46;
- $Z_{13}$ is the number of teeth of the first crown 43.

It should be noted that the rotation speed of the first sun gear 46 has a direction opposite the rotation speed of the driving shaft 2 and thus of the first crown 43. In fact, through the effect of the connection between the fourth shaft 19, on which is splined the first sun gear 46, and the driven pulley 71 of the speed variator 7, the fourth shaft 19 rotates in the same direction as the driven pulley 71, which, through the effect of the reversal of motion between the driving shaft 2 and the third shaft 8, determined by the first gear 3, rotates in an opposite direction to the driving shaft 2.

From the relation (1) disclosed above it is seen how in the configuration illustrated in Figure 1, the following can be obtained:

- zero advancing speed of the vehicle, when the two terms at the second member of the relation (1) have the same absolute value;
- a negative advancing speed of the vehicle, i.e. a reverse motion condition, when the first term at the second member of the relation (1) has an absolute value that is greater than the second term at the second member of the relation (1);
- a positive advancing speed of the vehicle, i.e. a forward motion condition, when the first term at the second member of the relation (1) has an absolute value that is less than the second term at the second member of the relation (1).

If it is supposed that the rotation speed of the driving shaft 2, and thus the rotation speed of the first crown 43, are kept constant the three conditions listed above are obtainable by varying the transmission ratio of the speed variator 7, which produces a variation in the speed of the first sun gear 46.

It should be noted that, in the condition of zero advancing speed, there is a torque transmission along the system according to the invention, so that it is possible to switch from the reverse motion condition to the forward motion condition and vice versa, without interrupting the torque transmission, which is particularly advantageous if the vehicle moves in conditions that require significant driving torque to the driving wheels, even with a stationary vehicle, as, for example, in the case of a vehicle that moves on a tilted portion.

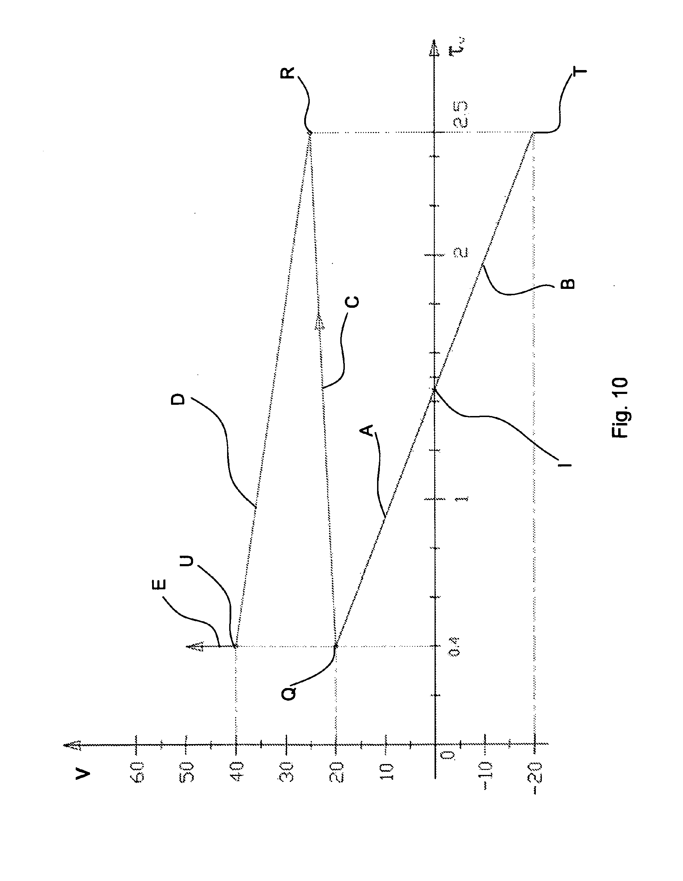

In Figure 10 there is illustrated the variation in speed of the vehicle in function of the transmission ratio of the speed variator 7, which is obtainable with the configuration in Figure 1, the transmission ratio being defined as the ratio between the rotation speed of the driven pulley 71 and the rotation speed of the driving pulley 72.

In the graph in Figure 10 it is supposed that the speed variator 7 has a transmission ratio that is variable between 0.4 and 2.5 and that the zero advancing speed condition, which corresponds to a point indicated by letter I in Figure 10, is obtained with a transmission ratio of approximately 1.5 in the speed variator 7.

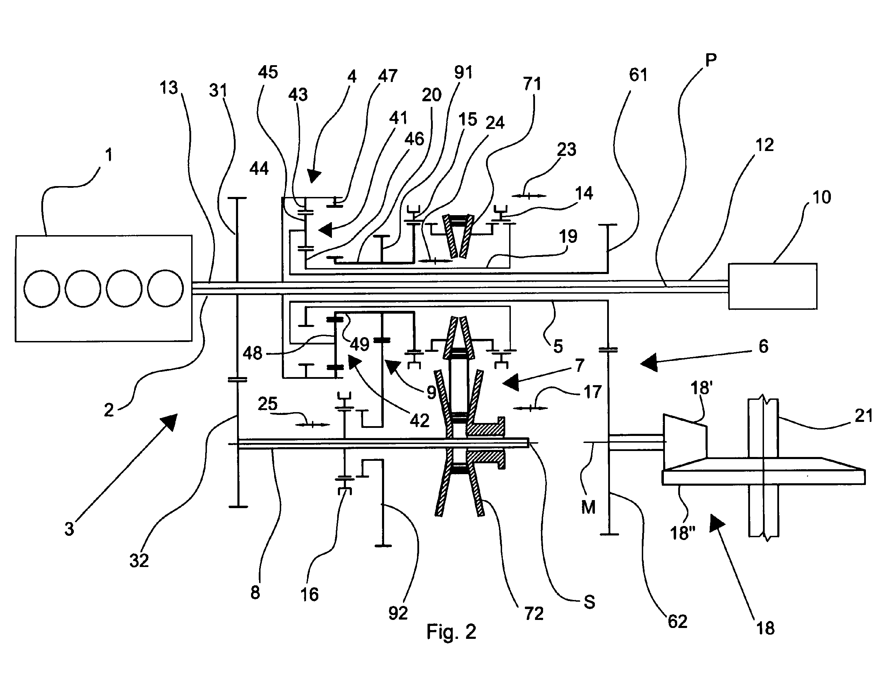

In Figure 2 there is illustrated the configuration that enables maximum forward motion speed of the vehicle with the configuration in Figure 1, the maximum speed that is obtained when the transmission ratio of the speed variator 7 is minimum.

This configuration corresponds to a first segment A in the graph in Figure 10, having point I and point Q as ends.

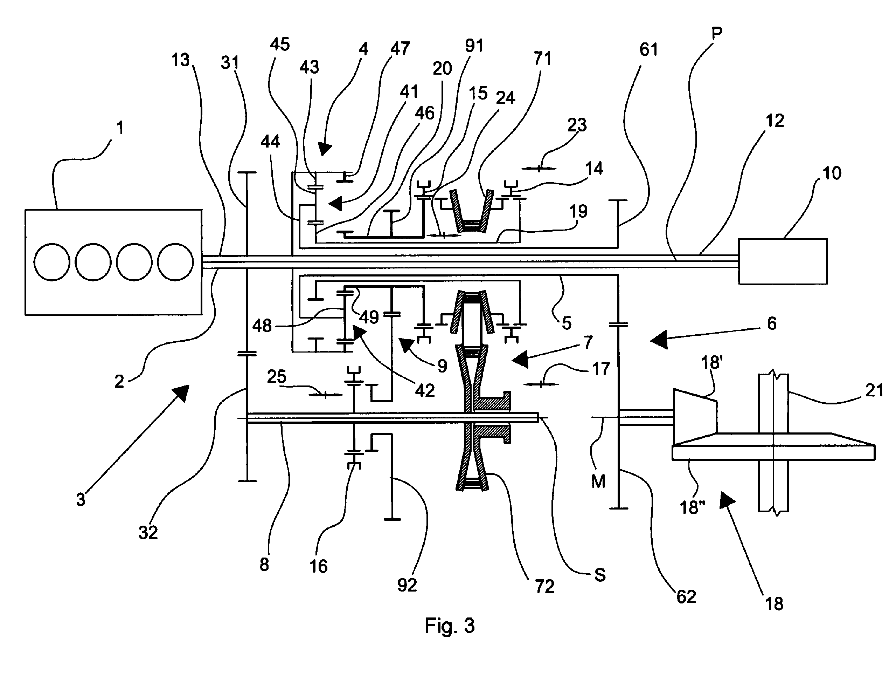

In Figure 3 there is illustrated the configuration that enables maximum reverse motion speed of the vehicle with the configuration in Figure 1, the maximum speed that is obtained when the transmission ratio of the speed variator 7 is at maximum.

This configuration corresponds to a second segment B in the graph in Figure 10, having point I and point T as ends.

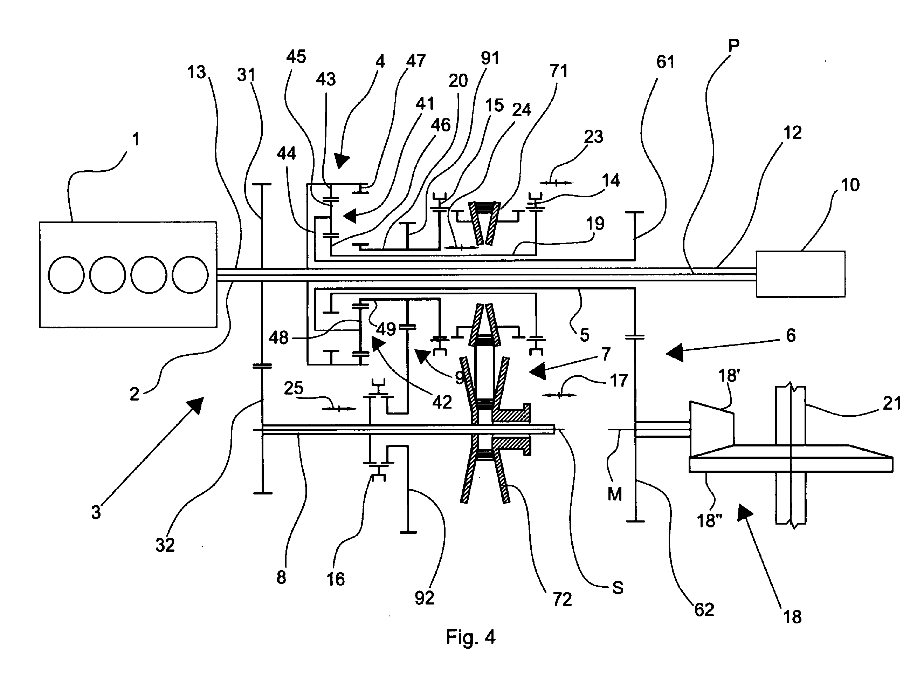

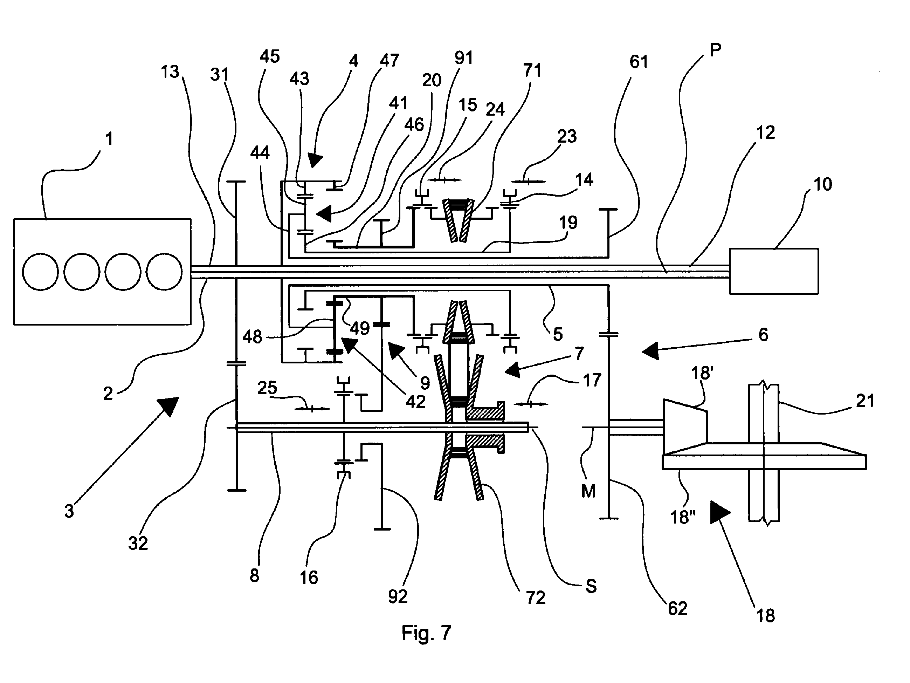

In Figure 4 there is illustrated a first intermediate configuration that enables to shift from the configuration illustrated in Figure 2, i.e. from a maximum forward motion speed configuration of the vehicle that is obtainable with the configuration in Figure 1, to a forward motion configuration of the vehicle at high speed, which is obtainable with the configuration in Figure 7, illustrated below in the description.

The operating configuration in Figure 4 is obtained from the configuration in Figure 2, (and correspondingly from point Q in the graph in Figure 10) in which the actuating means 17 imposes the minimum possible transmission ratio on the speed variator 7, and the second clutch device 15 is deactivated, activating the third clutch device 16 by the fourth actuating means 25 and deactivating the first clutch device 14 by the second actuating means 23.

In order to be able to activate the third clutch device 16 it is necessary for the number of teeth of the fifth toothed wheel 91 and of the sixth toothed wheel 92 to be selected in such a manner that, in the operating configuration in Figure 4, the angular speed of the sixth toothed wheel 92, before it is connected to the third shaft 8, is greater than that of the third shaft 8, but very close thereto, so as to enable the third clutch device 16 to come into engagement. When the third clutch device 16 is come into engagement, connecting the third shaft 8 to the sixth toothed wheel 92, the latter slows slightly to reach the same speed as the third shaft 8, which causes a corresponding slowing of the second sun gear 49 and, consequently, of the first sun gear 46. Slowing of the first sun gear 46 causes the torque on the first clutch device 14 to be cancelled, which can, thus, disengage by disconnecting the driven pulley 71 of the speed variator 7 from the fourth shaft 19, thus from the first sun gear 46.

The minimum transmission ratio possible can be equal to 0.4, as illustrated, for example, in Figure 10, or to a value that is near 0.4.

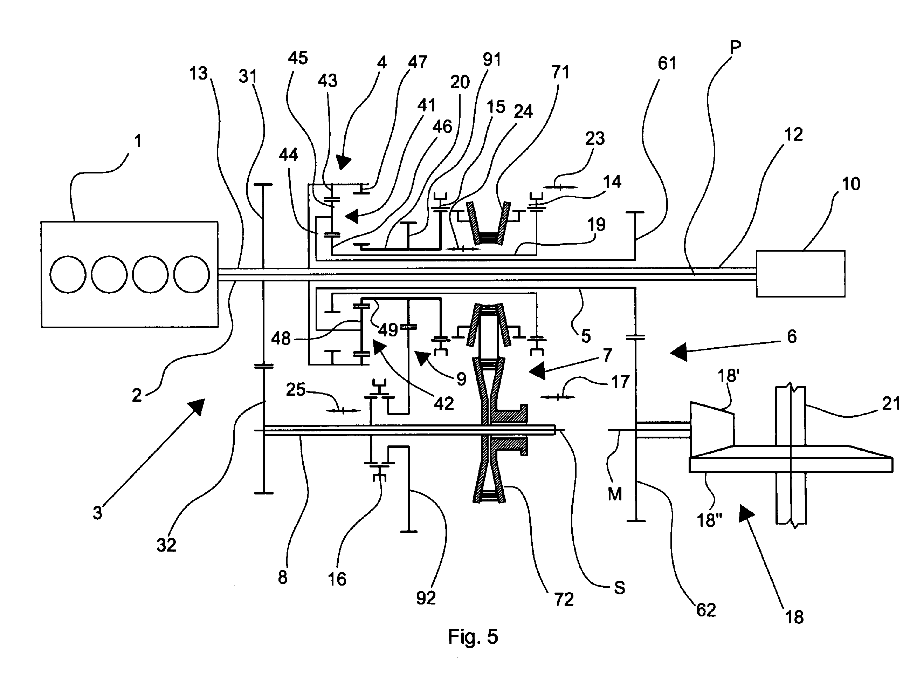

In Figure 5 there is illustrated a second intermediate configuration that permits the switch from the condition illustrated in Figure 2 of maximum forward motion speed of the vehicle that is obtainable with the configuration in Figure 1, to a forward motion speed configuration of the vehicle at high speed, obtainable with the configuration in Figure 7, illustrated below in the description.

The operating configuration in Figure 5 is obtained from the configuration in Figure 4 and, correspondingly, from point Q in the graph in Figure 10. Unlike Figure 4 the first actuating means 17 increases the transmission ratio of the speed variator 7 to the maximum possible value.

The maximum possible transmission ratio may be equal to 2.5, as illustrated, for example, in Figure 10, or to a value almost near 2.5.

In the operating configuration in Figure 5, the driven pulley 71 of the speed variator 7 continues to rotate in a freely rotatable manner, inasmuch as both the first clutch device 14 and the second clutch device 15, owing to which it is respectively connectable to the fourth shaft 19 or to the fifth shaft 20, are deactivated.

In Figure 10, the segment C, having point Q and point R as ends, is the graph of the forward motion speed of the vehicle that is obtainable by shifting from the configuration in Figure 4 to the configuration in Figure 5. It is advantageous to increase the speed of the vehicle when shifting from point Q to point R of the graph in Figure 10 increasing the speed of the engine 1 to maintain continuity in vehicle acceleration. It is nevertheless possible to make the shift from point Q to point R by keeping the engine speed 1 and thus vehicle speed constant. In this case the vehicle speed will be the same at the two points Q and R.

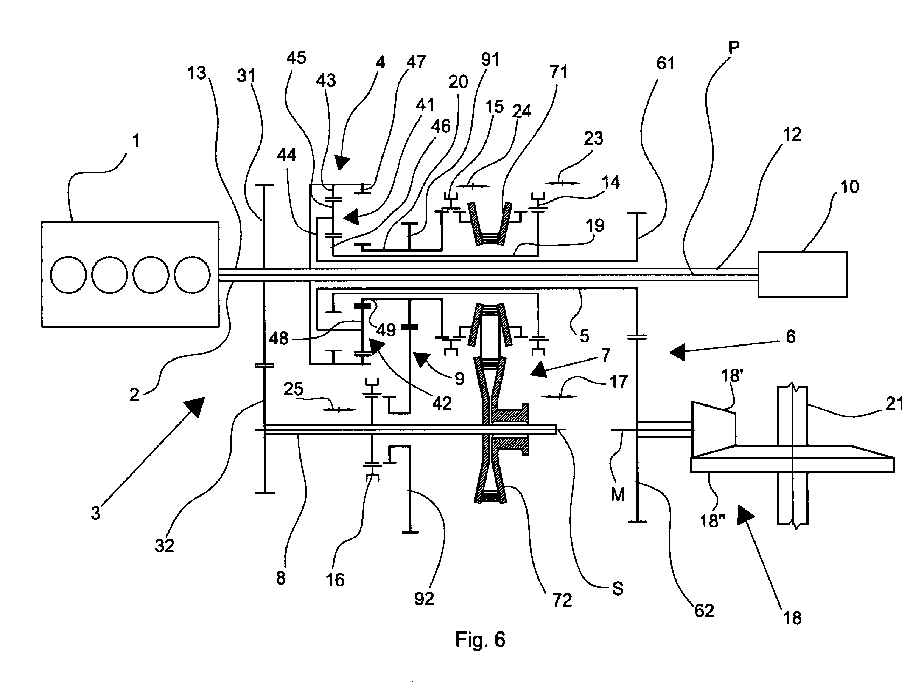

In Figure 6 there is illustrated a third intermediate configuration that enables the switch from the condition illustrated in Figure 2 of maximum forward motion speed of the vehicle obtainable with the configuration in Figure 1, to a forward motion speed configuration of the vehicle at high speed, obtainable with the configuration in Figure 7, illustrated below in the description.

The operating configuration in Figure 6 is obtained from the configuration in Figure 5.

In the operating configuration in Figure 6, the third clutch device 16 that in Figure 5 was activated, it was disengaged by the fourth actuating means 25, according to the methods disclosed previously with reference to Figures 12-14, 15 and 17. Further, the second clutch device 15 was engaged by the third actuating means 24.

For this purpose, starting from the configuration in Figure 5, the third actuating means 24 and the fourth actuating means 25 of the second and third clutch device respectively are activated so as to place the second clutch device 15 in a pre-engaged configuration and the third clutch device 16 in a pre-disengaged configuration. When the transmission ratio of the speed variator 7 reaches the value for which the rotation speed of the driven pulley 71 is slightly less than the speed of the second sun gear 49, the second clutch device 15 can move to the engaged configuration, connecting together the driven pulley 71 and the second sun gear 49.

As the rotation speed of the second sun gear 49 was, before engagement, slightly greater than the rotation speed of the driven pulley 71, after engagement, the second sun gear 49 slows slightly, which causes a cancellation of the torque on the third clutch device 16, which moves to a disengaged configuration, disconnecting the second sun gear 49 from the third shaft 8 and thus reaching the operating configuration in Figure 6 corresponding to the point R of the graph in Figure 10.

It is advantageous that the choice of the transmission ratio depending on the number of teeth of the epicyclic gear 4 of the first gear 3 and of the third gear 9 is made in such a manner that the condition for the engagement of the second clutch device 15 is reached with a transmission ratio of the speed variator 7 that is near the maximum value thereof to be able to exploit substantially the entire variation range of the transmission ratio of the speed variator 7 for a further acceleration of the vehicle.

The operating configurations of Figures 4, 5 and 6 are the three configurations that the continuously variable transmission system, in succession, has to assume to take the system to a condition that enables the movement from a configuration in which the power transmission occurs via the first epicyclic train 41 to a configuration in which the power transmission occurs via the second epicyclic train 42. In Figure 7 there is illustrated the condition that enables the maximum forward motion speed of the vehicle, which is reachable by the speed variator 7 and without interrupting power transmission.

In this configuration, unlike that in Figure 1, the second clutch device 15 is active, whilst the first clutch device 14 is deactivated.

In this configuration only the second epicyclic train 42 is thus active, i.e. transmits power.

The power transmission has in fact moved from the first epicyclic train 41, as in the case in Figure 1, to the second epicyclic train 42, inasmuch as the driven pulley 71 is no longer connected to the fourth shaft 19 on which is splined the first sun gear 46, but is connected to the fifth shaft 20 on which is splined the second sun gear 49.

La relation (1) can thus be written to take account of the corresponding changes.

In fact, with the operating configuration illustrated in Figures 6 and 7, indicating with:

- $\omega_{c2}$ the absolute value of the rotation speed of the second crown 47 of the second epicyclic train 42, which is the same as the rotation speed of the driving shaft 2;
- $\omega_{s2}$ the absolute value of the rotation speed of the second sun gear 49;
- $\omega_p$ the absolute value of the rotation speed of the planet gear carrier 44, that is proportional to the rotation speed of the driving wheels of the vehicle,

on the basis of the aforesaid law of Willis, the following relation is obtained

$$\omega_r = k\omega_p = k\left(-\omega_{s2}\frac{Z_{21}}{Z_{21}+Z_{23}} + \omega_{c2}\frac{Z_{23}}{Z_{21}+Z_{23}}\right) \qquad (2)$$

in which:

- $\omega_r$ is the rotation speed of the driving wheels of the vehicle;
- k is the transmission ratio between the second shaft 5, on which is splined the planet gear carrier 44, and the shaft 21 of the driving wheels;
- $Z_{21}$ is the number of teeth of the second sun gear 49;
- $Z_{23}$ is the number of teeth of the second bevel gear 47. As can be noted, the relation (2) is similar to the relation (1).

From the relation (2) disclosed above, it is seen how in the configuration illustrated in Figures 6 and 7, only positive values of the speed of the planet gear carrier 44 can be obtained, which speed of the planet gear carrier 44 being proportional to the speed of the driving wheels of the vehicle.

In fact, assuming that the rotation speed of the driving shaft 2 is maintained constant, from the moment of the engagement between driven pulley 71 and second sun gear 49 the speed of the vehicle is positive (corresponding to the point R of the graph in Figure 10) and the transmission ratio of the speed variator 7 is near the maximum value thereof, any decrease in the transmission ratio of the speed variator 7 involves a decrease of $\omega_{s2}$ and thus an increase of $\omega_r$.

Assuming that the rotation speed of the driving shaft 2 and therefore the rotation speed of the second crown 47 are kept constant, by varying the transmission ratio of the speed variator 7, a variation in the speed of the second sun gear 49 is obtainable, which produces a variation in the speed of the planet gear carrier 44 and consequently of the driving wheels of the vehicle, until a maximum forward motion speed is reached at the minimum transmission ratio of the speed variator 7.

In this manner, the system enables a speed range to be covered that is approximately twice that which is obtainable with a continuously variable transmission system of known type, but without interrupting the power and the torque transmission between maximum reverse motion advancing speed and maximum forward motion advancing speed.

In Figure 10, the segment D, having point R and point U as ends, represents the graph of the forward motion speed of the vehicle that is obtainable with the configuration of Figures 6 and 7.

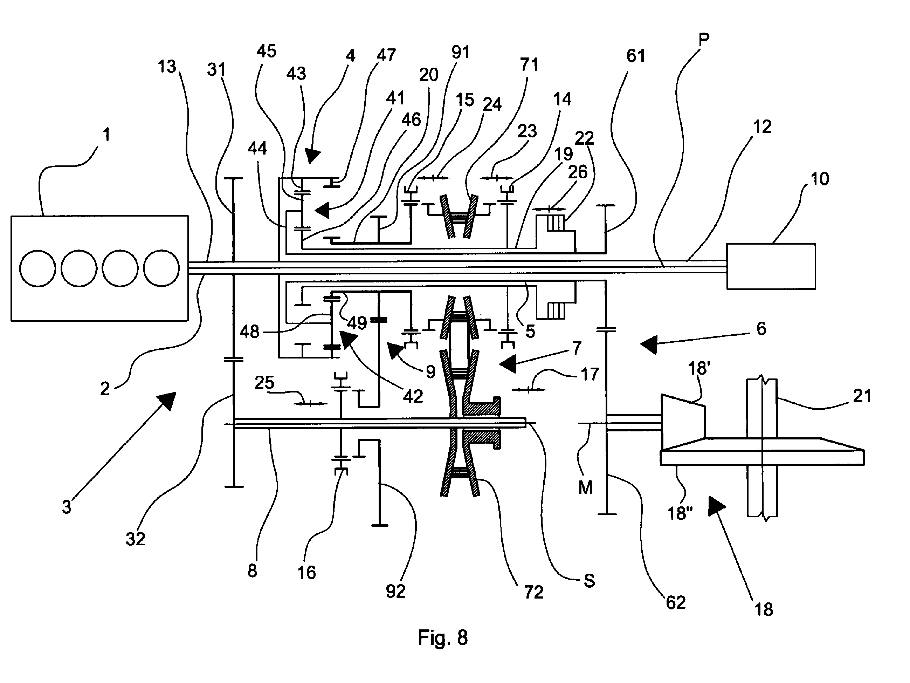

In Figure 8 there is illustrated a version of the system that enables a so-called overdrive condition to be obtained, i.e. an increase condition of the maximum speed of the vehicle without varying the transmission ratio of the speed variator 7. In this version there is provided a fourth clutch device 22 that can connect together the second shaft 5 to the fourth shaft 19 or to the fifth shaft 20. The fourth clutch device 22 can comprise a friction clutch, in particular a friction clutch of the progressive type. Said connection can be preferably obtained from the configuration in Figure 7, by activating the third actuating means 24 to start the disengagement of the second clutch device 15, and by simultaneously actuating fifth actuating means 26, to start the engagement of the fourth clutch device 22, shown only in Figure 8, but potentially present also in Figures 1-7. As soon as the fourth clutch device 22 starts to connect the second shaft 5 to the fourth shaft 19 or to the fifth shaft 20, the second clutch device 15 can disconnect the fourth shaft 19 of the driven pulley 71 of the speed variator 7. Once the second shaft 5 and the fourth shaft 19 or the fifth shaft 20 have been connected together, by disconnecting the fifth shaft 20 from the speed variator 7, the planet gear carrier 44 and the first sun gear 46 or the second sun gear 49 are constrained to rotate at the same speed, equal to that of the driving shaft 2. This involves that the epicyclic gear 4 has a unit transmission ratio with a consequent further increase in the speed of the vehicle at the same rotation speed of the engine 1. In this condition direct power transmission is obtained between the engine 1 and the third toothed wheel 61, excluding the speed variator 7.

In Figure 10, the segment E, having the point U as an end, shows the graph of the forward motion speed of the vehicle that is obtainable with the configuration in Figure 8. Activating the fourth clutch device 22 on the one hand enables the maximum speed reached with the speed variator 7 to be obtained (corresponding to the point U of the graph in Figure 10) in conjunction with a reduction in the speed of the engine 1, and, on the other hand, enables the range of forward motion speed of the vehicle to be extended in conjunction with an increase in the speed of the engine 1. This is particularly advantageous inasmuch as it enables fuel consumption, pollution, acoustic noise and wear to the motor propelling unit to be reduced.

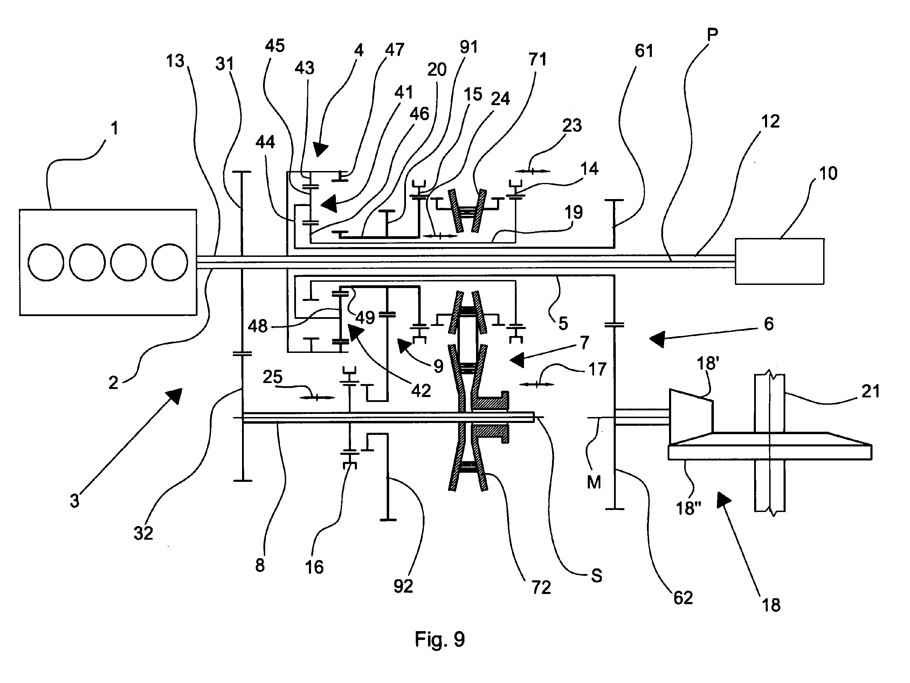

In Figure 9 there is illustrated a neutral condition of the continuously variable transmission system. The neutral condition is obtainable by deactivating all the clutch devices. This condition is required at the moment of startup of the vehicle or in cases of a vehicle fault for which the vehicle has to be towed to be able to be taken for repair.

Owing to the system it is possible to obtain a wide range of forward motion speed or of reverse motion speed values, with continuous speed variation, without interrupting the power and the torque transmission and with a substantially constant rotation speed of the engine 1.

Obviously, by varying the rotation speed of the engine 1, the speed of the vehicle can be varied for the same configuration of the speed variator 7. Further, in the configurations in Figure 5 and in Figure 8 the transmission power of the engine 1 to the wheels occurs at a fixed transmission ratio because the speed variator 7 is disconnected from the other transmission members. These two conditions represent maximum transmission efficiency configurations inasmuch as the greatest losses are connected to the use of the continuously variable transmission variator, which in the aforesaid configurations is excluded. Thee two configurations are associable in prevalent use conditions of the vehicle, such as, for example, in the case of an agricultural tractor, light cultivation and towing on fields, and, respectively, towing by road.

The continuously variable transmission system, owing to the prevalent use of power transmission and clutch devices different from friction type devices, has low power absorption, i.e. low power losses, low attrition and reduced manufacturing costs.

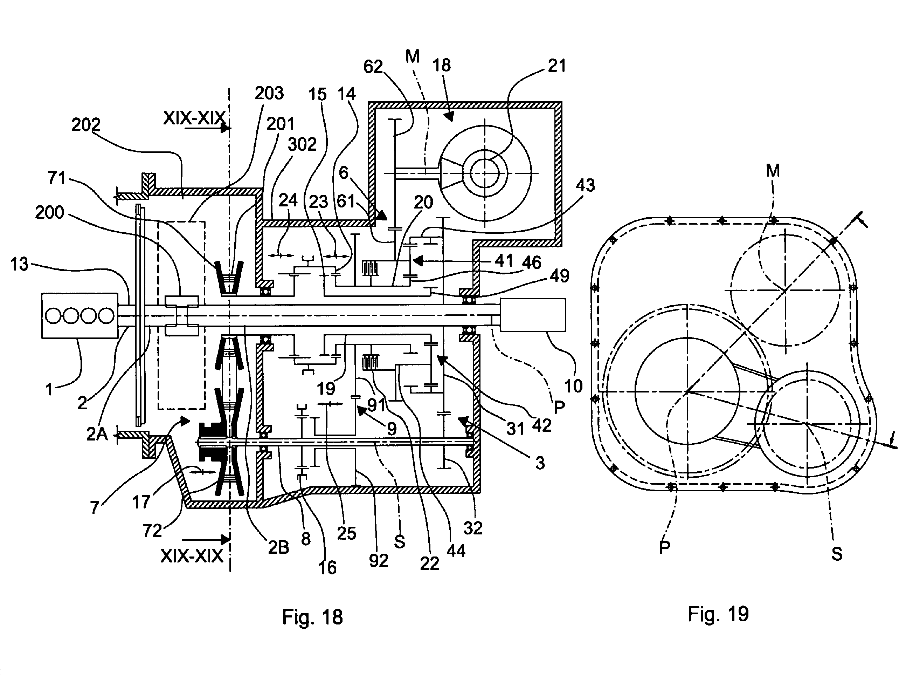

In Figure 18 there is shown a second version of the continuously variable transmission system, in an operating configuration like that in Figure 1. The operation of the continuously variable transmission system is similar to what has been disclosed previously. Also the components are similar to those of the continuously variable transmission system as disclosed previously and are indicated by the same reference numbers. In this version, nevertheless, the speed variator 7 may be of the dry-belt type, located in a housing 202 that is separated from a further housing 302 in which the other components of the transmission system are housed.

To reduce the overall height dimension of the continuously variable transmission system the primary rotation axis P of the driven pulley 71, the secondary rotation axis S of the driving pulley 72 and the rotation axis M of the fourth toothed wheel 62 of the second gear 6 are arranged like the corners of a triangular prism so as to reduce overall height dimensions of the transmission system, as shown in Figure 19.

Using a dry-belt variator makes the continuously variable transmission system less costly than if belt or chain variators in an oil bath are used, and it further has the advantage of being replaceable with greater facility.

For example, as indicated schematically in Figure 18, the driving shaft 2 is divided into a first section 2A driven by the engine 1 and into a second section 2B connected to the transmission.

The two sections 2A and 2B are connected together by a slidable sleeve 200, by moving which it is possible to create a passage between the first section 2A and the second section 2B, by using which it is possible to inspect or replace components of the speed variator 7 such as, for example, the belt 201, without having to dismantle any component of the transmission or of the vehicle body.

The housing 202 in which the speed variator 7 and the slidable sleeve 200 are housed can be accessed through a closable opening 203 located in a wall of said housing 202. In this version, further, the first sun gear 46 is splined on the fifth shaft 20, whilst the second sun gear 49 is splined on the fourth shaft 19. Also in this version, the fifth shaft 20 is connectable to the third shaft 8 by the third gear 9 and the third clutch device 16. The number of the teeth of the fifth toothed wheel 91 and of the sixth toothed wheel 92 is chosen in such a way that in an operating configuration like that in Figure 4, the angular speed of the sixth toothed wheel 92, before it is connected to the third shaft 8, is greater than that of the third shaft 8, but very near thereto, such as to enable the third clutch device 16 to come into engagement. When the third clutch device 16 comes into engagement by connecting the third shaft 8 to the sixth toothed wheel 92, the latter slows slightly to move at the same speed as the third shaft 8, which causes a corresponding slowing of the first sun gear 46. Slowing of the first sun gear 46 causes the torque on the first clutch device 14 to be cancelled, which can thus disengage by disconnecting the driven pulley 71 of the speed variator 7 from the fifth shaft 19, thus from the first sun gear 46, to enable subsequent connection of the driven pulley 71 to the second sun gear 49, as disclosed previously with reference to the system illustrated in Figures 1 to 7.

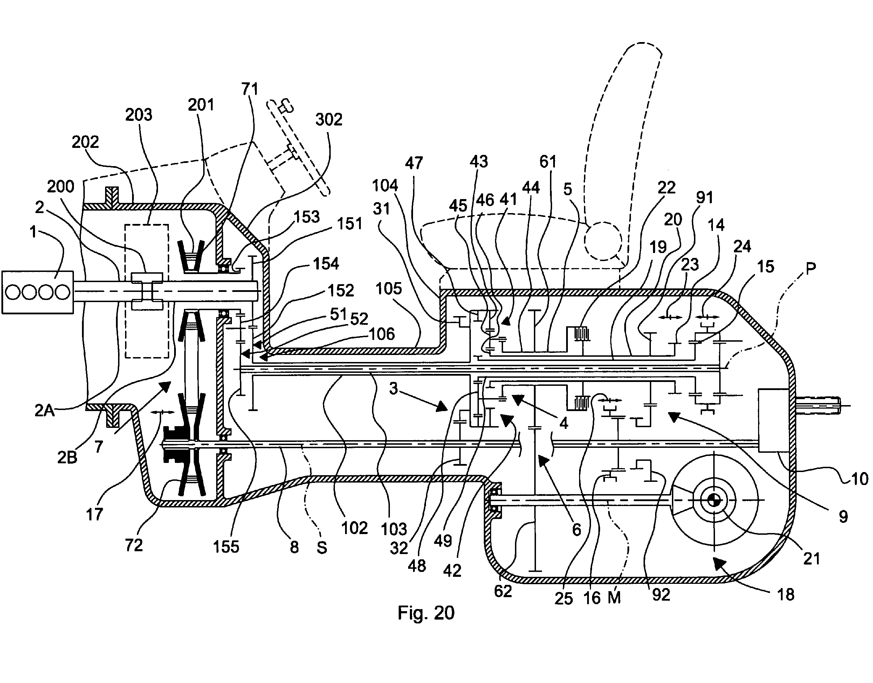

In Figure 20 there is shown a third version of the continuously variable transmission system in an operating configuration like that in Figure 1. The operation of the continuously variable transmission system is similar to that disclosed previously. Also the components are similar to those of the continuously variable transmission system as disclosed previously and are indicated by the same reference numbers.

In this version, the shafts are arranged so as to enable a space of a compartment 104 of the vehicle that is available to a driver to be increased.

In fact, the driving shaft 2 does not drive the crowns 43 and 47 of the epicyclic gear 4 directly but via a further shaft 102 that receives the motion from the driving shaft 2 by motion transmitting means 51.

The driven pulley 71 of the speed variator 7 drives by means of a further trasmitting means 52 a still further shaft 103 that is internally coaxial to the further shaft 102 and can be connected alternatively to the first sun gear 46 or to the second sun gear 49 by the first clutch device 14 and the second clutch device 15.

The further shaft 102 and, consequently, also the still further shaft 103, are parallel to the driving shaft 2, but are arranged below it, i.e. nearer the ground on which the driving wheels of the vehicle rest.

The dislocation of the further shaft 102 and of the further shaft 103 is determined by the motion transmitting means 51 and by the further motion transmitting means 52.

The motion transmitting means 51 comprises a seventh toothed wheel 151, splined at the end 12 on the driving shaft 2, and engaging with an eighth toothed wheel 152 splined on the still further shaft 103 at a zone 106.

In this version, it is the still further shaft 103 that is connected to the first crown 43 and not the driving shaft 2. The still further shaft 103 is further connected to the first toothed wheel 31 of the first gear 3, in the same manner in which in the version shown in Figure 1 the driving shaft 2 was connected to the first toothed wheel 31.

The second toothed wheel 32 engaging with the first toothed wheel 31 is splined, as in the versions disclosed previously, on the third shaft 8 around which the driving pulley 72 rotates.

The further motion transmitting means 52 comprises a ninth toothed wheel 153, splined on the shaft 300 rotated by the driven pulley 71, a tenth toothed wheel 154 engaging with the ninth toothed wheel 153, and an eleventh toothed wheel 155 engaging, in turn, with the tenth toothed wheel 154.

The eleventh toothed wheel 155 is splined on the still further shaft 103.

The tenth toothed wheel 154 is used to ensure that the shaft 300 and the still further shaft 103 have the same rotation direction, i.e. opposite the rotation direction of the further shaft 102, to obtain that the crowns 43 and 47 and the respective sun gears 46 and 49 rotate in opposite directions, as required on the basis of the relation (1). Using the motion transmitting means 51 and the further motion transmitting means 52 enables the further shaft 102 and the still further shaft 103 to be placed in a lowered position with respect to the driving shaft 2, which enables a floor 105 of the cab 104 to be lowered. As a result the comfort and accessibility of the vehicle are improved. The driver does not in fact have to overcome a great difference in height to board the vehicle and reach the floor 105 or to alight from the vehicle and reach the ground. The cab 104 can further be enlarged. This improves the comfort of the vehicle.

Further, by moving the slidable sleeve 200 it is possible to create a passage that enables components of the speed variator 7 to be inspected or replaced, such as, for example, the belt 201, without having to dismantle any component of the transmission or of the vehicle body, facilitating maintenance of the system.

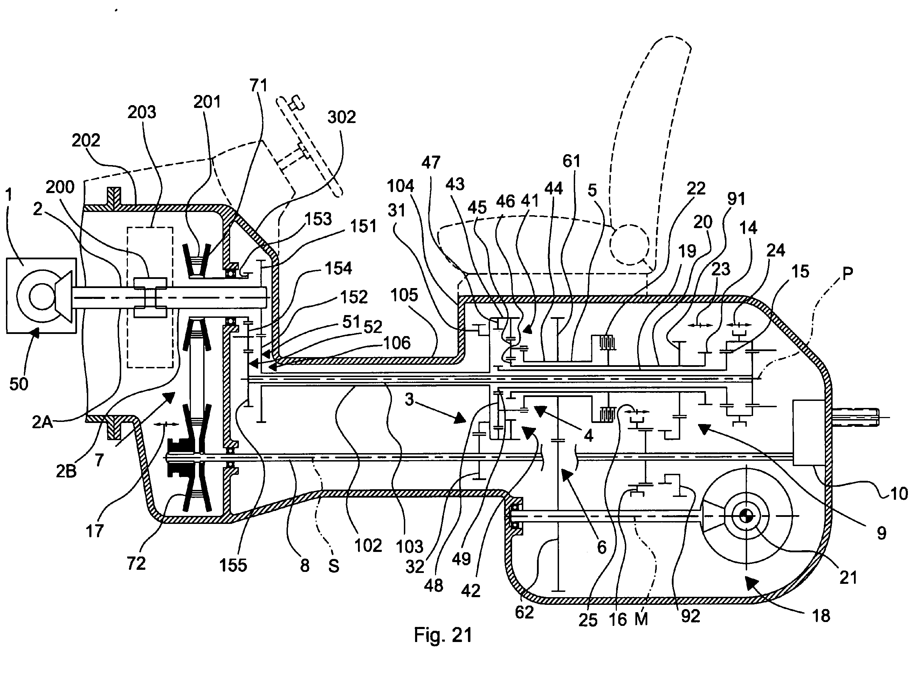

In Figure 21 there is illustrated a fourth version of the continuously variable transmission system, in which the engine 1 is arranged transversely and drives the driving shaft 2 by a bevel gear pair 50. Apart from that, the system is identical to the third version illustrated in Figure 20.

Similarly to the second version illustrated in Figures 18 and 19, also in the third version, illustrated in Figure 20, and in the fourth version, illustrated in Figure 21, the first sun gear 46 is splined on the fifth shaft 20, whilst the second sun gear 49 is splined on the fourth shaft 19. Also in these versions, the fifth shaft 20 is connectable to the third shaft 8 via the third gear 9 and the third clutch device 16.

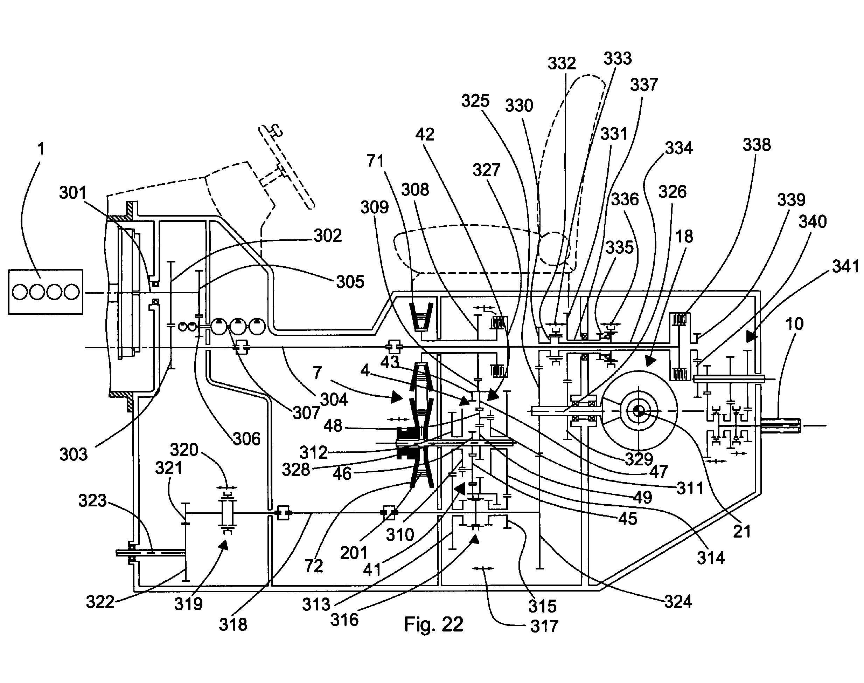

The transverse arrangement of the engine 1 can be adopted in all the other embodiments of the continuously variable transmission system that are disclosed in Figures 1 to 19, in addition to the embodiment that will be disclosed below with reference to Figure 22.

In Figure 22 there is illustrated a version of the continuously variable transmission system according to the invention in an operating configuration like that in Figure 1. The components that are similar to those of the continuously variable transmission system as disclosed previously, are indicated by the same reference numbers.

In this version, the engine 1 drives a first shaft 301 and a first toothed wheel 302, that engages with a second toothed wheel 303, by means of which a second shaft 304 is driven, which transmits motion to the transmission of the tractor and to the power takeoff 10 for driving tools connected to the tractor. The first shaft 301 further drives a third toothed wheel 305 that engages with a fourth toothed wheel 306, by means of which a third shaft 307 is driven that in turn drives the hydraulic pumps of the services, such as, for example, the power steering, the hydraulic lift, the remote function of the tools connected to the tractor and the pumps for managing lubrication.

The second shaft 304 drives, via a clutch 327, a fifth toothed wheel 308 that engages with a sixth toothed wheel 309, that transmits the motion to a double epicyclic gear 4. The double epicyclic gear 4 comprises a first epicyclic train 41 and a second epicyclic train 42. The first epicyclic train 41 comprises a first crown 43 that engages with first planets 45 supported by a first planet gear carrier 310 and that in turn engage with a first sun gear 46. The second epicyclic train 42 comprises a second crown 47 that engages with second planets 48 supported by a second planet gear carrier 311 and that in turn engage with a second sun gear 49. The first crown 43 and the second crown 47 are both driven by the sixth toothed wheel 309. The first sun gear 46 and the second sun gear 49 are splined on a fourth shaft 328. The first planet gear carrier 310 is connected to a seventh toothed wheel 312 that engages with an eighth toothed wheel 313.

The first crown 43 has a number of teeth that can be the same as or different from the number of teeth of the second crown 47, whilst the first sun gear 46 has a number of teeth that is different from the number of teeth of the second sun gear 49.

The second planet gear carrier 311 is connected to a ninth toothed wheel 314 that engages with a tenth toothed wheel 315.

The eighth toothed wheel 313 and the tenth toothed wheel 315 are connectable selectively to a fifth shaft 318, by a first clutch device 316, that is completely similar to the clutch devices 14, 15, 16, 22 disclosed previously, driven by a first actuating means 317 that is completely similar to the actuating means 23, 24, 25 disclosed previously.

The first clutch device 316 can assume three different positions: a first position in which only the tenth toothed wheel 315 is connected to the fifth shaft 318, a second position in which only the eighth toothed wheel 313 is connected to the fifth shaft 318, and a third position in which neither the eighth toothed wheel 313 not the tenth toothed wheel 315 is connected to the fifth shaft 318.

The fifth shaft 318 is in turn selectively connectable, via a second clutch device 319, driven by a second actuating means 320 to an eleventh toothed wheel 321, that engages with a twelfth toothed wheel 322, which drives a sixth shaft 323, which transmits motion to the front axle of the tractor.

On the fifth shaft 318, further, a thirteenth toothed wheel 324 is splined, that engages with a fourteenth toothed wheel 325 splined on a seventh shaft 326, that drives, by means of a pair of bevel gears 18, the shaft 21 that drives the driving wheels of the tractor.

The second shaft 304, can be further connected by said clutch 327 to the driving pulley 71 of a speed variator 7, for example a Vee belt or chain variator, the driven pulley 72 of which is splined on the fourth shaft 328.

On the seventh shaft 326, in addition to the fourteenth toothed wheel 325, a fifteenth toothed wheel 329 is splined. The fourteenth toothed wheel 325 engages with a sixteenth toothed wheel 330 that is selectively connectable to an eighth shaft 334, which is coaxial with the second shaft 304, by a third clutch device 332 driven by a third actuating means 333. The fifteenth toothed wheel 329 engages with a seventeenth toothed wheel 331, that is selectively connectable to a ninth shaft 337, which is coaxial with a second shaft 304 and with the eighth shaft 334, by a fourth clutch device 335 driven by a fourth actuating means 336. The eighth shaft 334 is connectable to second shaft 304 by a second clutch 338.

On the eighth shaft 334 an eighteenth toothed wheel 339 is further splined that engages with a nineteenth toothed wheel 340, that drives by a multigear speed change 341 the power takeoff 10 of the tractor.

The operation of said version of the continuously variable transmission system according to the invention is disclosed below.

The first crown 43 and the second crown 47 of the double epicyclic gear 4 receive motion from the second shaft 304, according to a fixed transmission ratio, by the fifth toothed wheel 308 and the sixth toothed wheel 309. Further, the first sun gear 46 and the second sun gear 49 of the double epicyclic gear 4 receive motion from the driven pulley 72 of the speed variator 7. The rotation speed of the second driven pulley 72 of the speed variator 7 depends, according to a variable transmission ratio, on the rotation speed of the driving pulley 71, driven by the second shaft 304. The transmission ratio between the driving pulley 71 and the driven pulley 72 depends on the position of the belt or chain 201 in the speed variator 7.

The crowns 43 and 47 thus have the same speed, just as the sun gears 46 and 49 have the same speed, whilst the speeds of the planet gear carriers 310 and 311 are different through the effect of the different number of teeth of the two sun gears 46 and 49 and possibly of the two crowns 43 and 47.

In particular, as the motion of the crowns 43 and 47 and that of the sun gears 46 and 49 are of an opposite type, one of the two planet gear carriers, for example the first planet gear carrier 310, can have a rotation speed that is in the same direction as or in an opposite direction to the rotation speed of the first crown 43, depending on the value of the transmission ratio of the speed variator 7, whilst the other planet gear carrier, for example the second planet gear carrier 311, will have a rotation speed in the direction as that of the second crown 47, for any value of the transmission ratio del speed variator 7.

Further, the speed of the fifth shaft 318 that is obtainable by positioning the first clutch device 316 in said second position and with the speed variator 7 at the minimum transmission ratio, is substantially identical with the speed that is obtainable by positioning the first clutch device 316 in said first position and with the speed variator 7 at the maximum transmission ratio.

The possibility of obtaining on one of the planet gear carriers a rotation speed that is in the same direction or in an opposite direction to that of the first crown 43, which always rotates in the same direction, enables the passage to be achieved without interrupting the motion of the vehicle from forward motion to reverse motion.

The above is due to the choice of the combination of numbers of teeth of the three elements of each of the two epicyclic trains 41 and 42, in addition to, as already said, the discordance of the signs of the input speed in said epicyclic trains.

Let the first epicyclic train 41 be considered.

When the minimum transmission ratio in the speed variator 7 is reached, the subtrahend term of the Willis equation is minimal, thus the angular speed of the first planet gear carrier 310 is maximum, i.e. the maximum advancing speed of the vehicle is obtained, with the first clutch device 316 in said second position.

In these conditions, the gear consisting of the fourteenth toothed wheel 325 and the sixteenth toothed wheel 330, imposes on the sixteenth toothed wheel 330 a speed that is slightly less than the speed of the second shaft 304, so that, following the engagement of the second clutch 338, the eighth shaft 334 assumes a speed that is very little greater than the speed of the sixteenth toothed wheel 330, but fairly near the speed of the sixteenth toothed wheel 330 so as to enable the third clutch device 332 so be driven, so as directly to connect the second shaft 304 to the seventh shaft 326 through the sixteenth toothed wheel 330 and the fourteenth toothed wheel 325. This enables the power to be transmitted directly by the engine 1 to the driving wheels of the vehicle with a fixed transmission ratio and enables the speed variator 7 and the double epicyclic gear 4 to be excluded from the transmission. In fact, when the second shaft 304 and the seventh shaft 326 are connected together, the slight increase in the speed of the vehicle enables the variable transmission ratio power line to be unloaded instantaneously that comprises the speed variator 7 and the double epicyclic gear 4, and thus the first clutch device 316 to be taken to said third position in which the double epicyclic gear 4 is disconnected from the fifth shaft 318, preventing the power transmission through speed variator 7 and the double epicyclic gear 4.

As the speed variator 7 does not now transmit power, it can be reconfigured to take the speed variator 7 from the minimum transmission ratio condition to the maximum transmission ratio condition.

When the speed variator 7 has been reconfigured with the maximum transmission ratio the driven pulley 72 reaches maximum speed, and together therewith, also the first sun gear 46 and the second sun gear 49 reach maximum speed, i.e. the subtrahend term of the Willis ratio relating to the second epicyclic train 42 is maximum, the second epicyclic train 42 comprising the second crown 47, the second sun gear 49 and the second planet gear carrier 311. In these conditions there is a substantial synchronism between the tenth toothed wheel 315 and the fifth shaft 318, in particular the speed of the tenth toothed wheel 315 will be slightly greater than the speed of the fifth shaft 318, so that, by moving the first clutch device 316 in said first position, by connecting the double epicyclic gear 4 to the fifth shaft 318, there will be a slight increase in the speed of the later. This means that the third clutch device 332 is unloaded, also without disengaging the second clutch 338, so as to be able to be taken to a disengagement position, by disconnecting the eighth shaft 334 from the gear consisting of the fourteenth toothed wheel 325 and the sixteenth toothed wheel 330, which means that the power transmission from the engine 1 to the wheels of the tractor now occurs through the speed variator 7 and the double epicyclic gear 4.

In this condition, by reducing the transmission ratio of the speed variator 7 a progressive increase in the speed of the tractor is obtained until a maximum speed is reached at the minimum transmission ratio of the speed variator 7. Nevertheless, in this condition the tractor can still further increase speed by inserting a connection with a fixed transmission ratio between the second shaft 304 and the seventh shaft 326 that drives the bevel gear pair 18.

This connection is achieved by connecting together, by the fourth clutch device 335, the eighth shaft 334 and the ninth shaft 337, which drives the gear consisting of the seventeenth toothed wheel 331, splined on the ninth shaft 337, and the fifteenth toothed wheel 329, splined on the seventh shaft 326.

The transmission ratio of the gear consisting of the fifteenth toothed wheel 329 and the seventeenth toothed wheel 331 is chosen in such a manner that the rotation speed of the ninth shaft 337, in the conditions specified above, before it is connected to the eighth shaft 334, is noticeably less than the rotation speed of the second shaft 304.

Before activating the fourth clutch device 335 the eighth shaft 334 must be synchronised with the ninth shaft 337, by partially engaging the second clutch 338, such that the second shaft 304 rotates the eighth shaft 334 until it is synchronised with the ninth shaft 337. At this point the fourth clutch device 336 can be activated by connecting together the eighth shaft 334 and the ninth shaft 337.

At this point, by completing the engaging of the second clutch 338 the ninth shaft 337 accelerates until it reaches the same rotation speed as the second shaft 304, with a further increase in the speed of the tractor.

Everything that disclosed previously relating to the operation of said version of the continuously variable transmission system according to the invention refers to an operating condition with constant rotation speed of the engine 1.

It should be noted that the first clutch 327 is used to disconnect the engine 1 from the speed variator 7 and from the double epicyclic gear 4, if it is necessary to stop suddenly the vehicle, or to start up the engine 1, or in the event of a transmission fault to permit the vehicle to be towed, or to save energy in the case of operations with tools connected to the power takeoff 10 whilst the vehicle is stationary.

**Claims**

1. Continuously variable transmission system for a vehicle comprising:

   - a first shaft (301) that receives motion from an engine (1) of said vehicle and transmits said motion to an epicyclic gear (4) and to a speed variator (7);
   - said epicyclic gear (4) comprising a first epicyclic train (41) and a second epicyclic train (42), said first epicyclic train (41) comprising a first sun gear (46), a first crown (43) and first planets (45);
   - said second epicyclic train (42) comprising a second sun gear (49), a second crown (47) and second planets (48);
   - said first planets (45) being supported by a first planet gear carrier (310);
   - said second planets (48) being supported by a second planet gear carrier (311);
   - whereby said speed variator (7) can be connected to said first shaft (301) and is connected to said epicyclic gear (4);

   **characterised in that** said first shaft (301) transmit said motion to said first crown (43) and to said second crown (47), **in that** said speed variator is connected to said first sun gear (46) and to said second sun gear (49), **in that** the motion of said first crown (43) and said second crown (47) is opposite to the motion of said first sun gear (46) and second sun gear (49) , and **in that** said first epicyclic train (41) and said second epicyclic train (42) are able to be connected alternatively to a shaft (326) that transmits motion to wheels of the vehicle.

2. Continuously variable transmission system according to claim 1, wherein said shaft (326) that transmits motion to wheels of the vehicle can be connected alternatively to said first planet gear carrier (310), or to said second planet gear carrier (311).

3. Continuously variable transmission system according to any preceding claim wherein said shaft (326) that transmits motion to wheels of the vehicle can be driven by said first shaft (301).

4. Continuously variable transmission system according to claim 3, wherein said shaft (326) that transmit motion to wheels of the vehicle can be connected to said first driving shaft (301) via a pair of toothed wheels (325, 330) or another pair of toothed wheels (329, 331) alternatively.

5. Continuously variable transmission system according to any one of claims 1 to 4, **characterised in that** said first shaft (301) is connected to a second shaft (304) that drives said first crown (43), said second crown (47) and said speed variator (7), a clutch (327) being associated to said second shaft (304), said clutch (327) being suitable for interrupting the transmission of motion between said second shaft (304) and said speed variator (7) and epicyclic gear (4).

6. Continuously variable transmission system, according to any one of claims 1 to 5, comprising a first clutch device (316) suitable for making alternatively a connection between said first epicyclic train (41), or said second epicyclic train (42), and said shaft (326) that transmit motion to wheels of the vehicle.

7. Continuously variable transmission system, according to claim 6, wherein said first clutch device (316) is further suitable for interrupting a connection between said epicyclic gear (4) and said shaft (326) that transmit motion to wheels of the vehicle.

8. Continuously variable transmission system according to any one of claims 4 to 7, comprising a third clutch device (332) that is suitable for making a connection between said second shaft (304) and said pair of toothed wheels (325, 330).

9. Continuously variable transmission system according to any one of claims 4 to 8, comprising a fourth clutch device (335) that is suitable for making a connection between said second shaft (304) and said other pair of toothed wheels (329, 331).

10. Continuously variable transmission system according to any one of claims 1 to 9, wherein said speed variator (7) is a belt or chain speed variator.

11. Continuously variable transmission system according to any one of claims 1 to 9, wherein said speed variator is a dry-belt speed variator.

12. Continuously variable transmission system according to claim 10, or 11, wherein said speed variator (7) is housed in a housing (202) separated from a further housing (302) in which the other system components are housed.

13. Continuously variable transmission system according to claim 12, wherein said housing (202) is accessible from the exterior by a closable opening (203).

**Patentansprüche**

1. Stufenlos regelbares Übertragungssystem für ein Fahrzeug, das Folgendes aufweist:

   - eine erste Welle (301), die eine Bewegung von einem Motor (1) des Fahrzeugs empfängt und die Bewegung zu einem Umlaufrädergetriebe (4) und zu einem Geschwindigkeitsregler (7) überträgt;
   - wobei das Umlaufrädergetriebe (4) einen ersten Umlaufrädersatz (41) und einen zweiten Umlaufrädersatz (42) aufweist, wobei der erste Umlaufrädersatz (41) ein erstes Sonnenrad (46), einen ersten Kranz (43) und erste Planeten (45) aufweist;

- wobei der zweite Umlaufrädersatz (42) ein zweites Sonnenrad (49), einen zweiten Kranz (47) und zweite Planeten (48) aufweist;
- wobei die ersten Planeten (45) durch einen ersten Planetenradträger (310) gestützt werden;
- wobei die zweiten Planeten (48) durch einen zweiten Planetenradträger (311) gestützt werden;
- wobei der Geschwindigkeitsregler (7) mit der ersten Welle (301) verbindbar ist und mit dem Umlaufrädergetriebe (4) verbunden ist;

**dadurch gekennzeichnet, dass** die erste Welle (301) die Bewegung zum ersten Kranz (43) und zum zweiten Kranz (47) überträgt, dass der Geschwindigkeitsregler mit dem ersten Sonnenrad (46) und mit dem zweiten Sonnenrad (49) verbunden ist, dass die Bewegung des ersten Kranzes (43) und des zweiten Kranzes (47) der Bewegung des ersten Sonnenrads (46) und des zweiten Sonnenrads (49) entgegengerichtet ist, und dass der erste Umlaufrädersatz (41) und der zweite Umlaufrädersatz (42) dazu ausgebildet sind, wahlweise mit einer Welle (326) verbunden zu werden, die eine Bewegung zu Rädern des Fahrzeugs überträgt.

2. Stufenlos regelbares Übertragungssystem gemäß Anspruch 1, wobei die Welle (326), die eine Bewegung zu Rädern des Fahrzeugs überträgt, wahlweise mit dem ersten Planetenradträger (310) oder mit dem zweiten Planetenradträger (311) verbindbar ist.

3. Stufenlos regelbares Übertragungssystem gemäß irgendeinem der vorgehenden Ansprüche, wobei die Welle (326), die eine Bewegung zu Rädern des Fahrzeugs überträgt, durch die erste Welle (301) antreibbar ist.

4. Stufenlos regelbares Übertragungssystem gemäß Anspruch 3, wobei die Welle (326), die eine Bewegung zu Rädern des Fahrzeugs überträgt, wahlweise über ein Paar von Zahnrädern (325, 330) oder über ein anderes Paar von Zahnrädern (329, 331) mit der ersten Antriebswelle (301) verbindbar ist.

5. Stufenlos regelbares Übertragungssystem gemäß irgendeinem der Ansprüche 1 bis 4, **dadurch gekennzeichnet, dass** die erste Welle (301) mit einer zweiten Welle (304) verbunden ist, die den ersten Kranz (43), den zweiten Kranz (47) und den Geschwindigkeitsregler (7) antreibt, wobei eine Kupplung (327) mit der zweiten Welle (304) verbunden ist, wobei die Kupplung (327) dazu ausgebildet ist, die Bewegungsübertragung zwischen der zweiten Welle (304) und dem Geschwindigkeitsregler (7) und dem Umlaufrädergetriebe (4) zu unterbrechen.

6. Stufenlos regelbares Übertragungssystem gemäß irgendeinem der Ansprüche 1 bis 5, umfassend eine erste Kupplungseinrichtung (316), die dazu ausgebildet ist, wahlweise eine Verbindung zwischen dem ersten Umlaufrädersatz (41) oder dem zweiten Umlaufrädersatz (42) und der Welle (326) herzustellen, die eine Bewegung zu Rädern des Fahrzeugs überträgt.

7. Stufenlos regelbares Übertragungssystem gemäß Anspruch 6, wobei die erste Kupplungseinrichtung (316) ferner dazu ausgebildet ist, eine Verbindung zwischen dem Umlaufrädergetriebe (4) und der Welle (326) zu unterbrechen, die eine Bewegung zu Rädern des Fahrzeugs überträgt.

8. Stufenlos regelbares Übertragungssystem gemäß irgendeinem der Ansprüche 4 bis 7, umfassend eine dritte Kupplungseinrichtung (332), die dazu ausgebildet ist, eine Verbindung zwischen der zweiten Welle (304) und dem Paar von Zahnrädern (325, 330) herzustellen.

9. Stufenlos regelbares Übertragungssystem gemäß irgendeinem der Ansprüche 4 bis 8, umfassend eine vierte Kupplungseinrichtung (335), die dazu ausgebildet ist, eine Verbindung zwischen der zweiten Welle (304) und dem anderen Paar von Zahnrädern (329, 331) herzustellen.

10. Stufenlos regelbares Übertragungssystem gemäß irgendeinem der Ansprüche 1 bis 9, wobei der Geschwindigkeitsregler (7) ein Riemen- oder Kettengeschwindigkeitsregler ist.

11. Stufenlos regelbares Übertragungssystem gemäß irgendeinem der Ansprüche 1 bis 9, wobei der Geschwindigkeitsregler ein Geschwindigkeitsregler mit trockenem Riemen ist.

12. Stufenlos regelbares Übertragungssystem gemäß Anspruch 10 oder 11, wobei der Geschwindigkeitsregler (7) in einem Gehäuse (202) beherbergt ist, das von einem weiteren Gehäuse (302) getrennt ist, in dem die anderen Systemkomponenten beherbergt sind.

13. Stufenlos regelbares Übertragungssystem gemäß Anspruch 12, wobei das Gehäuse (202) über eine verschließbare Öffnung (203) von außen zugänglich ist.

**Revendications**

1. Système de boîte de vitesse à variation continue pour un véhicule, comprenant :

   - un premier arbre (301) qui est entraîné en mouvement par un moteur (1) dudit véhicule et qui transmet ledit mouvement à un engrenage épicycloïdal (4) et à un variateur de vitesse (7) ;
   - ledit engrenage épicycloïdal (4) comprenant un premier train épicycloïdal (41) et un deuxième train épicycloïdal (42), ledit premier train épicycloïdal (41) comprenant un premier planétaire (46), une première couronne (43) et des premiers satellites (45) ;
   - ledit deuxième train épicycloïdal (42) comprenant un deuxième planétaire (49), une deuxième couronne (47) et des deuxièmes satellites (48) ;
   - lesdits premiers satellites (45) étant portés par un premier support de roue planétaire (310) ;
   - lesdits deuxièmes satellites (48) étant portés par un deuxième support de roue planétaire (311) ;
   - et dans lequel ledit variateur de vitesse (7) peut être relié audit premier arbre (301) et est relié audit engrenage épicycloïdal (4) ;

   **caractérisé en ce que** ledit premier arbre (301) transmet ledit mouvement à ladite première couronne (43) et à ladite deuxième couronne (47), **en ce que** ledit variateur de vitesse est relié audit premier planétaire (46) et audit deuxième planétaire (49), **en ce que** le mouvement de ladite première couronne (43) et de ladite deuxième couronne (47) est opposé au mouvement dudit premier planétaire (46) et dudit deuxième planétaire (49), et **en ce que** ledit premier train épicycloïdal (41) et ledit deuxième train épicycloïdal (42) sont aptes à être reliés en alternance à un arbre (326) qui transmet le mouvement à des roues du véhicule.

2. Système de boîte de vitesse à variation continue selon la revendication 1, dans lequel ledit arbre (326) qui transmet le mouvement à des roues du véhicule peut être relié en alternance audit premier support de roue planétaire (310) ou audit deuxième support de roue planétaire (311).

3. Système de boîte de vitesse à variation continue selon une quelconque revendication précédente, dans lequel ledit arbre (326) qui transmet son mouvement à des roues du véhicule peut être entraîné par ledit premier arbre (301).

4. Système de boîte de vitesse à variation continue selon la revendication 3, dans lequel ledit arbre (326) qui transmet le mouvement à des roues du véhicule peut être relié audit premier arbre d'entraînement (301) par l'intermédiaire d'une paire de roues dentées (325, 330) ou par une autre paire de roues dentées (329, 331), en alternance.

5. Système de boîte de vitesse à variation continue selon l'une quelconque des revendications 1 à 4, **caractérisé en ce que** ledit premier arbre (301) est relié à un deuxième arbre (304) qui entraîne ladite première couronne (43), ladite deuxième couronne (47) et ledit variateur de vitesse (7), un embrayage (327) étant associé audit deuxième arbre (304), ledit embrayage (327) étant apte à interrompre la transmission de mouvement entre ledit deuxième arbre (304) et lesdits variateur de vitesse (7) et engrenage épicycloïdal (4).

6. Système de boîte de vitesse à variation continue selon l'une quelconque des revendications 1 à 5, comprenant un premier dispositif d'embrayage (316) apte à établir en alternance une liaison entre ledit premier train épicycloïdal (41), ou ledit deuxième train épicycloïdal (42), et ledit arbre (326) qui transmet le mouvement à des roues du véhicule.

7. Système de boîte de vitesse à variation continue selon la revendication 6, dans lequel ledit premier dispositif d'embrayage (316) est en outre apte à interrompre une liaison entre ledit engrenage épicycloïdal (4) et ledit arbre (326) qui transmet le mouvement à des roues du véhicule.

8. Système de boîte de vitesse à variation continue selon l'une quelconque des revendications 4 à 7, comprenant un troisième dispositif d'embrayage (332) qui est apte à établir une liaison entre ledit deuxième arbre (304) et ladite paire de roues dentées (325, 330).

**9.** Système de boîte de vitesse à variation continue selon l'une quelconque des revendications 4 à 8, comprenant un quatrième dispositif d'embrayage (335) qui est apte à établir une liaison entre ledit deuxième arbre (304) et ladite autre paire de roues dentées (329, 331).

**10.** Système de boîte de vitesse à variation continue selon l'une quelconque des revendications 1 à 9, dans lequel ledit variateur de vitesse (7) est un variateur de vitesse à courroie ou à chaîne.

**11.** Système de boîte de vitesse à variation continue selon l'une quelconque des revendications 1 à 9, dans lequel ledit variateur de vitesse est un variateur de vitesse à courroie sèche.

**12.** Système de boîte de vitesse à variation continue selon la revendication 10 ou 11, dans lequel ledit variateur de vitesse (7) est logé dans un boîtier (202), séparé d'un autre boîtier (302) dans lequel les autres composants du système sont logés.

**13.** Système de boîte de vitesse à variation continue selon la revendication 12, dans lequel ledit boîtier (202) est accessible de l'extérieur par une ouverture (203) qui peut être refermée.

Fig. 1

Fig. 2

Fig. 3

Fig. 4

Fig. 5

Fig. 6

Fig. 7

EP 2 399 046 B1

Fig. 8

Fig. 9

Fig. 10

Fig. 11

Fig. 13

Fig. 12

Fig. 14

Fig. 15

Fig. 16

Fig. 17

Fig. 18

Fig. 19

EP 2 399 046 B1

Fig. 20

Fig. 21

Fig. 22

**EP 2 399 046 B1**

**Patent documents cited in the description**

- DE 3543635 A